# EUROPÄISCHE PATENTSCHRIFT

(11) **EP 2 379 357 B1**
(45) Veröffentlichungstag und Bekanntmachung des Hinweises auf die Patenterteilung: **09.03.2016**
(21) Anmeldenummer: 09808979.0
(22) Anmeldetag: 10.12.2009
(51) Int. Cl.: B60J 7/02

(54) **SCHIEBEDACH MIT SCHLITTENELEMENT**
SLIDABLE SUNROOF WITH CARRIAGE
TOIT COULISSANT AVEC CHARIOT

(30) Priorität: 19.01.2009 DE 102009005133
(43) Veröffentlichungstag der Anmeldung: 26.10.2011
(73) Patentinhaber: Webasto SE, 82131 Stockdorf (DE)
(72) Erfinder: FÄRBER, Manfred, 82407 Wielenbach (DE); BIRNDORFER, Robert, 82362 Weilheim (DE); POLLAK, Martin, 82178 Puchheim (DE)
(74) Vertreter: advotec.
(86) Internationale Anmeldenummer: PCT/DE2009/001748
(87) Internationale Veröffentlichungsnummer: WO 2010/081448

(56) Entgegenhaltungen:
- FR-A1- 2 645 803
- US-B2- 6 695 398

## Beschreibung

Die Erfindung betrifft ein Fahrzeugdach mit mindestens einem eine Dachöffnung wahlweise verschließenden oder zumindest teilweise freigebenden Deckelelement gemäß dem Oberbegriff des Patentanspruchs 1. Ein derartiges Fahrzeugdach ist beispielsweise aus FR 265803 A bekannt.

Aus der US 6,695,398 B2 ist ein weiteres Fahrzeugdach bekannt, welches ein Deckelelement umfasst, das entlang seiner bezogen auf die Fahrzeuglängsmittelebene seitlichen Ränder jeweils mit einem Trägerelement versehen ist, das einen Schwenk- bzw. Ausstellarm darstellt. Entlang der seitlichen Ränder der Dachöffnung sind Führungsschienen angeordnet, in denen jeweils eines der Trägerelemente verschiebbar geführt ist. Die Trägerelemente wirken jeweils mit einer Verstelleinrichtung zusammen, die ein Schlittenelement umfasst, welches mit einer Klaue versehen ist, die mit einer Kulissenbahn bzw. Steuerbahn des jeweiligen Trägerelements zusammenwirkt. Ein Verfahren der Schlittenelemente in den Führungsschienen löst eine Schwenkbewegung der Trägerelemente und damit des Deckelelements aus.

Des Weiteren ist es aus der Praxis bekannt, bei Schlittenelementen gemäß der vorstehend beschriebenen Art einen Führungsabschnitt auszubilden, auf dem das jeweilige

Trägerelement mit seiner Unterseite aufliegt und der aus einer elastisch gelagerten Stahlrolle besteht, die aus einem Wälzlagerstahlrohr gebildet ist, in welchem ein Dämpfer eingebettet ist, der die elastische Lagerung bildet. Ein derartiger, aus einer Stahlrolle gebildeter Führungsabschnitt ist zudem sehr kostenintensiv. Durch die geringen Abmessungen des Dämpfers ist gegebenenfalls kein hinreichender Toleranzausgleich in Fahrzeughochrichtung möglich. Auch herrscht durch die von der Stahlrolle vorgegebene Linienberührung zu dem an dem jeweiligen Trägerelement ausgebildeten Führungssteg eine hohe Flächenpressung. Dies kann wiederum bei Betätigung der Verstelleinrichtung zu einem Auftreten ungewünschter Geräusche durch den so genannten Stick-Slip-Effekt führen.

Der Erfindung liegt die Aufgabe zugrunde, ein Fahrzeugdach der einleitend genannten Gattung zu schaffen, das sich durch günstige Herstellungskosten bei optimiertem Toleranzausgleich bzw. Kraftaufnahme des Schlittenelements auszeichnet.

Diese Aufgabe ist erfindungsgemäß durch das Fahrzeugdach mit den Merkmalen des Patentanspruchs 1 bzw. Patentanspruchs 18 gelöst.

Der Kern der Erfindung gemäß Anspruch 1 besteht mithin darin, dass der Führungsabschnitt von einer Wand eines Kunststoffbauteils gebildet ist, die elastisch verformbar in einen von dem Kunststoffbauteil gebildeten Hohlraum ausweichen kann. Der Führungsabschnitt ist mithin von einem kostengünstig herstellbaren Bauteil gebildet, das mit seiner an dem Trägerelement anliegenden Wand eine Gleitfläche bildet, die hinsichtlich der jeweils vorliegenden kinematischen Erfordernisse optimiert ausgelegt werden kann. Der von der Wand des Kunststoffbauteils gebildete Führungsabschnitt kann

insbesondere eine Anlagefläche bilden, was zu optimierten Gleiteigenschaften zwischen dem jeweiligen Trägerelement und dem Schlittenelement führt. Denkbar ist es aber auch, dass der von der Wand gebildete Führungsabschnitt über eine Kontaktlinie an dem betreffenden Trägerelement anliegt.

Bei einer besonders kostengünstig herstellbaren Ausführungsform des Fahrzeugdachs nach der Erfindung ist das Schlittenelement ein Kunststoffspritzgießteil. Im Gegensatz zu Schlittenelementen nach dem Stand der Technik, die aus lackiertem Stahl hergestellt sind, ist damit auch eine erhöhte Variabilität hinsichtlich der Formgebung des Schlittenelements möglich.

Bei einer bevorzugten Ausführungsform des Fahrzeugs nach der Erfindung ist das Kunststoffteil, das die den Führungsabschnitt bildende Wand aufweist, einstückig mit dem Schlittenelement ausgebildet. Der Führungsabschnitt und das Schlittenelement sind damit in einem Formgebungsprozess ohne weitere Montageschritte hergestellt.

Um dem Schlittenelement in seinen verschiedenen Funktionsbereichen jeweils optimierte Eigenschaften verleihen zu können, kann es vorteilhaft sein, das Schlittenelement als Zweikomponentenspritzgießteil auszubilden, wobei ein Schlittenelementkörper von einer ersten Kunststoffkomponente und das Kunststoffbauteil, das die den Führungsabschnitt bildende Wand aufweist, von einer zweiten Kunststoffkomponente gebildet ist. Auch ein die Führungskulisse bzw. den Führungssteg übergreifender Klauenabschnitt kann aus der zweiten Kunststoffkomponente gebildet sein, die im Zusammenspiel mit dem Werkstoff der Umspritzung des Führungsstegs des Trägerelements eine optimierte Gleitpaarung bildet.

Bei einer alternativen Ausführungsform des Fahrzeugdachs nach der Erfindung ist das Kunststoffbauteil ein Einsatz eines Körpers des Schlittenelements. Das Schlittenelement weist dann also einen Schlittenelementkörper auf, der mit einer Ausnehmung zur Aufnahme des Kunststoffbauteils versehen ist, das die den Führungsabschnitt bildende Wand aufweist.

Vorzugsweise ist bei der zweiteiligen Ausführungsform aus Schlittenelementkörper und Kunststoffbauteil das Kunststoffbauteil an den Schlittenelementkörper verrastet und damit mit letzterem unverlierbar verbunden.

Denkbar ist es aber auch, dass das Kunststoffbauteil lose in die Ausnehmung des Schlittenelementkörpers eingesetzt ist und sich dann beispielsweise mit einer Basisfläche an der Führungsschiene abstützt und rechtwinkelig zur Basisfläche in der Ausnehmung geführt ist.

Um die den Führungsabschnitt bildende Wand des Kunststoffbauteils in Richtung des Trägerelements vorzuspannen und auch die von dem Trägerelement in diese Wand eingeleiteten Kräfte zu dämpfen, ist bei einer speziellen Ausführungsform des Fahrzeugdachs nach der Erfindung ein elastisch verformbares Dämpfungselement in dem Hohlraum angeordnet, an dem sich die den Führungsabschnitt bildende Wand abstützt. Das Dämpfungselement ist beispielsweise aus einem federlelastischen Kunststoff, wie EPDM, TPE, NBR oder dergleichen, gefertigt.

Zur Erhöhung der Vorspannung der die Führungsabschnitte bildenden Wand in vertikaler Richtung, das heißt in Richtung des betreffenden Trägerelements, kann das Dämpfungselement an seiner an der den Führungsabschnitt bildenden Wand anliegenden Seite quer zur Erstreckung der Führungsschiene gekrümmt ausgebildet sein.

Zur Sicherung des Dämpfungselements in dem Hohlraum kann das Schlittenelement einen Vorsprung aufweisen, das in eine Aussparung des Dämpfungselements eingreift und dieses in Position hält.

Eine zweckmäßige Ausführungsform des Schlittenelements weist eine seitliche Öffnung zum Einsetzen des Dämpfungselements auf, die zu dem Hohlraum führt, der von der die Führungsfläche bildenden Wand begrenzt ist.

Das Dämpfungselement kann aus der seitlichen Öffnung des Schlittenelements vorstehen, um insbesondere auch eine dämpfende und damit Störgeräusche entgegenwirkende Ablagefläche für einen ansonsten üblichen Verriegelungshebel der Steuermechanik zu bilden.

Zur Erhöhung der Vorspannung der auf das Trägerelement wirkenden Wand des Kunststoffteils kann diese Wand zumindest einseitig quer zur Erstreckung des Trägerelements gekrümmt ausgebildet sein. Beispielsweise ist die dem Hohlraum zugewandte Fläche der Wand oder auch die dem Trägerelement zugewandte Fläche quer zur Erstreckung des Trägerelements gekrümmt.

Bei einer weiteren alternativen Ausführungsform des Fahrzeugdachs nach der Erfindung hat die Führungskulisse des Trägers eine an dem Führungsabschnitt anliegende Wirkfläche, die in Querrichtung gekrümmt ist, so dass auch hier eine Vorspannung als Toleranzausgleich in Fahrzeughochrichtung aufgebracht und die eingeleiteten Kräfte spannungsreduziert in angrenzende Bauteile eingeleitet werden.

Zur optimierten Anpassung des Führungsabschnitts an die verschiedenen Verstellbereiche des betreffenden Trägerelements ist der Führungsabschnitt vorzugsweise von zwei Führungsflächen gebildet, die jeweils einer Schwenkphase des Deckelelements zugeordnet sind, zueinander verkippt sind und in Längsrichtung der Führungsschiene hintereinander angeordnet sind.

Ferner kann es zweckmäßig sein, die den Führungsabschnitt bildende Wand doppelwandig auszubilden. Die beiden Einzelwände der doppelwandigen Wand können über Querstege miteinander verbunden sein.

Durch die Ausbildung des Schlittenelements als Kunststoffspritzgießteil ist es möglich, an diesem einstückig Federlaschen anzuformen, die in zugeordneten Führungsbahnen der jeweiligen Führungsschienen an einer Führungsbahnwand anliegen.

Die Erfindung hat gemäß Anspruch 18 auch ein Fahrzeugdach mit mindestens einem eine Dachöffnung wahlweise verschließenden oder zumindest teilweise freigebenden Deckelelement zum Gegenstand, das bezogen auf die Fahrzeuglängsmittelebene beidseits jeweils ein Trägerelement aufweist, das mit einer Führungskulisse versehen ist und mit einer Verstelleinrichtung zusammenwirkt. Die Verstelleinrichtung ist in einer in Fahrzeuglängsrichtung angeordneten Führungsschiene geführt und umfasst ein Schlittenelement, das mit der Führungskulisse des jeweiligen Trägerelements zumindest zum Verschwenken des Deckelelements zusammenwirkt und einen Führungsabschnitt umfasst, auf dem das Trägerelement aufliegt. Das Schlittenelement stützt sich über eine mittig angeordnete, unterseitige Feder an der betreffenden Führungsschiene ab. Diese Feder kann bei Auftreten hoher Kräfte in Fahrzeughochrichtung die Kräfte direkt in die Führungsschiene einleiten. Diese Feder, die außerhalb von Führungsbahnen für Gleitelemente des Schlittenelements an der Führungsschiene aufliegt, kann Federn ersetzen, die ansonsten an den Gleitelementen ausgebildet sein könnten und in Fahrzeughochrichtung wirken.

Die Feder ist beispielsweise eine Blattfeder, die über einen Gleitabschnitt an einer Gleitfläche der Führungsschiene anliegt, die zwischen Führungsbahnen der Führungsschiene liegt, in denen die seitlichen Gleitelemente des Schlittenelements geführt sind.

Die Feder kann zweckmäßigerweise als Einsatz des Schlittenelements ausgebildet sein, der ein Einlegeteil bei der Herstellung des Schlittenelements sein kann oder auch nachträglich in einen Schlitz des Schlittenelements eingesetzt sein kann. Denkbar ist es aber auch, die Feder aus Kunststoff auszubilden und einstückig bei der Herstellung des insbesondere als Spritzgießbauteil ausgebildeten Schlittenelements auszuformen.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Fahrzeugdachs nach der Erfindung sind in der Zeichnung schematisch vereinfacht dargestellt und werden in der nachfolgenden Beschreibung näher erläutert. Es zeigt:
Fig. 1 eine Überblicksdarstellung eines in Führungsschienen geführten Deckelelements eines Schiebehebedachs;
Fig. 2 eine in einer Führungsschiene geführte Verstelleinrichtung für das Deckelelement in Schließstellung des Deckelelements;
Fig. 3 eine Fig. 2 entsprechende Ansicht, jedoch in Lüfterstellung des Deckelelements;
Fig. 4 eine ebenfalls Fig. 2 entsprechende Ansicht der Verstelleinrichtung, jedoch für eine abgesenkte Verschiebestellung des Deckelelements;
Fig. 5 eine perspektivische Ansicht eines Schlittenelements der Verstelleinrichtung zusammen mit einem Trägerelement des Deckelelements;
Fig. 6 einen Längsschnitt durch das Schlittenelement und das Trägerelement;
Fig. 7 einen Schnitt in Fahrzeugquerrichtung durch die Verstelleinrichtung für das Deckelelement;
Fig. 8 alternative Ausführungsformen der Verstelleinrichtung;
Fig. 9 einen Längsschnitt durch eine weitere Ausführungsform eines Schlittenelements mit einem Dämpfungselement für von dem Trägerelement eingeleitete Kräfte;
Fig. 10 einen Längsschnitt durch ein Schlittenelement mit einer unterseitigen Abstützfeder;
Fig. 11 einen Längsschnitt durch ein Schlittenelement mit einem einen Führungsabschnitt bildenden Einsatz;
Fig. 12 eine alternative Ausführungsform eines Schlittenelements mit Einsatz;
Fig. 13 eine weitere alternative Ausführungsform eines Schlittenelements mit einem Einsatz, der einen Führungsabschnitt für das Trägerelement bildet;
Fig. 14 eine Ausführungsvariante der Verstelleinrichtung für eine Schließstellung des Deckelelements;
Fig. 15 die in Fig. 14 dargestellte Ausführungsvariante für die abgesenkte Verschiebestellung des Deckelelements; und
Fig. 16 einen Schnitt der in eine Führungsschiene eingesetzten Verstellmechanik nach den Figuren 14 und 15.

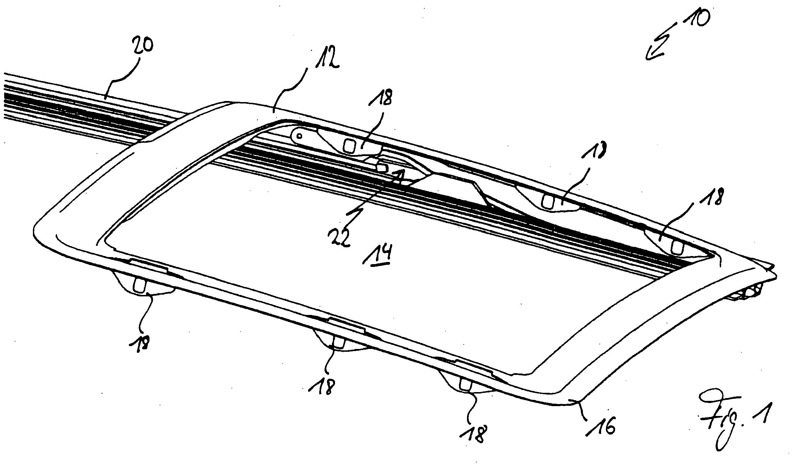

In Fig. 1 ist ein Schiebehebedach 10 dargestellt, das zum Einbau in ein nicht näher dargestelltes Dach eines Kraftfahrzeuges ausgelegt ist und ein Deckelelement 12 aufweist, mittels dessen eine Dachöffnung wahlweise verschlossen oder zumindest teilweise freigegeben werden kann. Das Deckelelement 12 weist einen Glaskörper 14 auf, der von einem aus einem Polyurethanschaum gebildeten Rahmen 16 umschlossen ist, in dem entlang der bezogen auf eine Fahrzeuglängsmittelebene seitlichen Ränder Befestigungslaschen 18 angebunden sind. Die Befestigungslaschen 18 dienen dazu, das Deckelelement 12 mit einer Verstelleinrichtung 22 zur Betätigung des Deckelelements 12 zu verbinden, in die entlang der Dachöffnung angeordneten Führungsschienen 20 geführt ist. In Fig. 1 ist der Übersichtlichkeit halber nur die in Vorwärtsfahrtrichtung links angeordnete Verstelleinrichtung 22 zusammen mit der zugeordneten Führungsschiene 20 dargestellt.

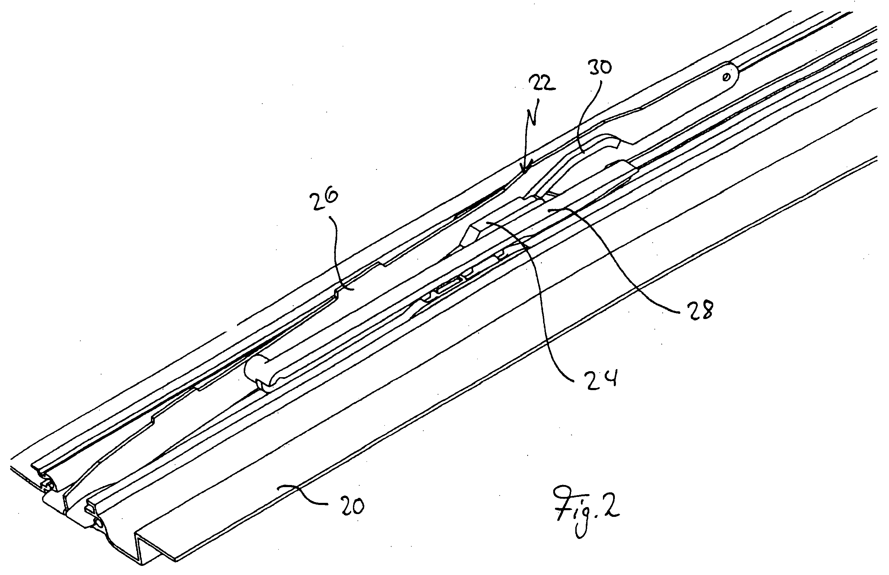

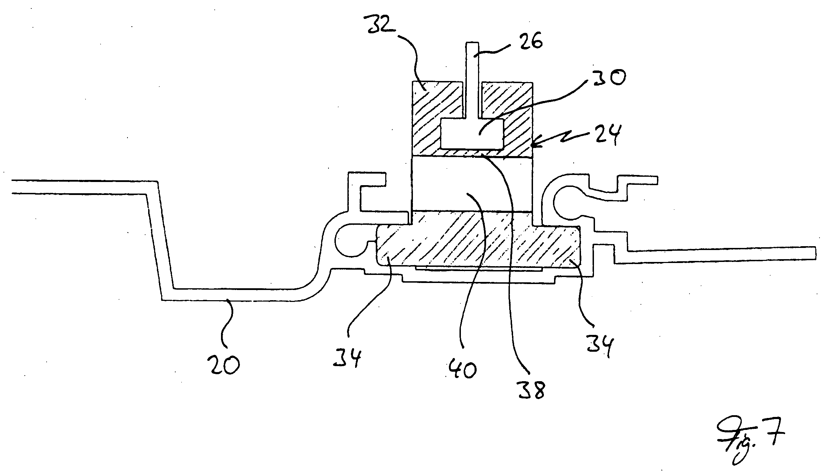

Die in den Figuren 2 bis 9 detailliert dargestellte Verstelleinrichtung 22 umfasst einen Antriebsschlitten 24, der mittels eines nicht näher dargestellten drucksteifen Antriebskabels in der Führungsschiene 20 verfahrbar ist, ein Trägerelement 26, an dem das Deckelelement 12 über die Befestigungslaschen 18 angeschraubt ist, sowie einen Verriegelungshebel 28, mittels dessen die Position des Deckelelements 12 in Fahrzeuglängsrichtung gesichert werden kann und zu diesen Zwecken über einen Vorsprung mit einer so genannten Garage der Führungsschiene zusammenwirkt.

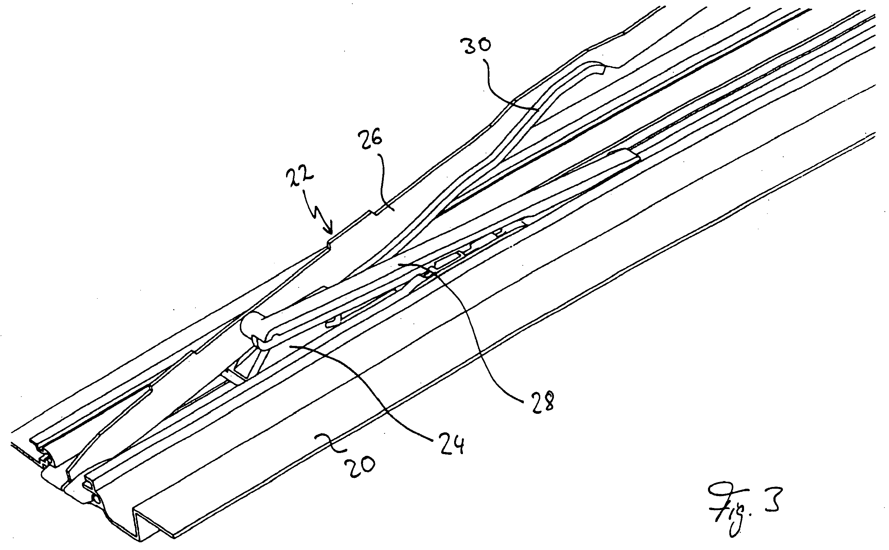

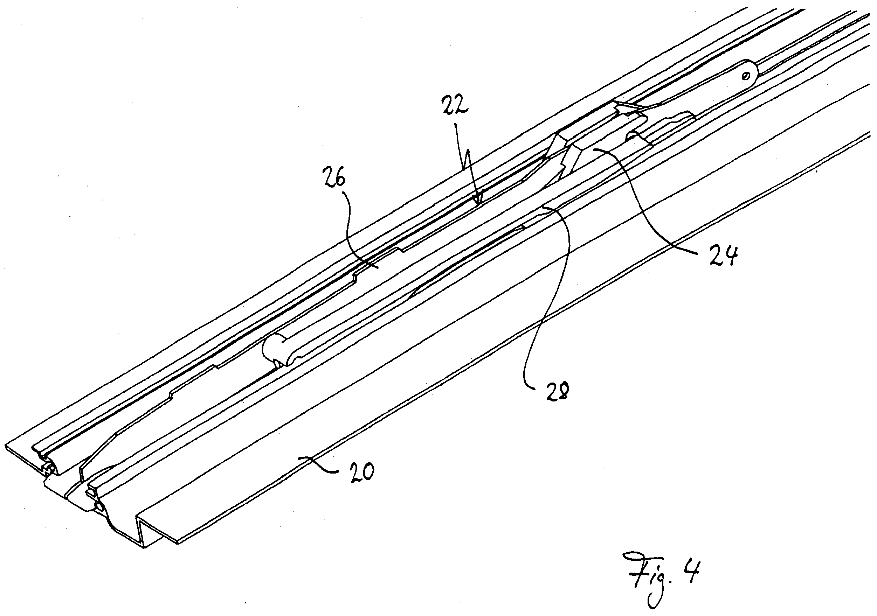

Mittels der vorliegend dargestellten Verstelleinrichtung 22 kann das Deckelelement 12 zwischen einer Schließstellung, die anhand der Figuren 1 und 2 dargestellt ist, einer Lüfterstellung, die anhand von Figur 3 dargestellt ist und einer abgesenkten Verschiebestellung verschwenkt werden, die anhand von Figur 4 dargestellt ist und in der das Deckelelement 12 in Fahrzeuglängsrichtung verfahrbar ist. In der in Fig. 2 dargestellten Schließstellung deckt das Deckelelement 12 die Dachöffnung komplett ab. In der in Fig. 3 dargestellten Lüftstellung ist das Deckelelement 12 mit seinem hinteren Rand über das Niveau eines rückwärtigen festen Dachbereichs angehoben. In der anhand Fig. 4 dargestellten, abgesenkten Stellung ist das Deckelelement 12 in eine so genannte Verschiebestellung abgesenkt, in der es unter einen rückwärtigen festen Dachbereich verfahren werden kann.

Die in Fahrtrichtung rechts angeordnete Verstelleinrichtung, an die das Deckelelement 12 über seine am rechten Rand ausgebildeten Befestigungslaschen 18 angebunden ist, ist spiegelsymmetrisch zu der in der Zeichnung in Fahrtrichtung links dargestellten Verstelleinrichtung ausgebildet und wird daher nicht näher erläutert.

Das Trägerelement 26 ist aus einem Stanzblech gebildet und stellt einen Schwenk- bzw. Ausstellarm für das Deckelelement 12 dar. An seinem unteren Rand weist das Trägerelement 26 einen als Führungskulisse dienenden, im Wesentlichen T-förmigen Führungssteg 30 auf, der eine vom Fahrzeugheck aus betrachtet im Wesentlichen abfallenden Verlauf hat und mit dem Antriebsschlitten 24 zusammenwirkt. Der Führungssteg 30 ist mit einer Umspritzung aus einem Kunststoff mit günstigen Gleiteigenschaften umspritzt.

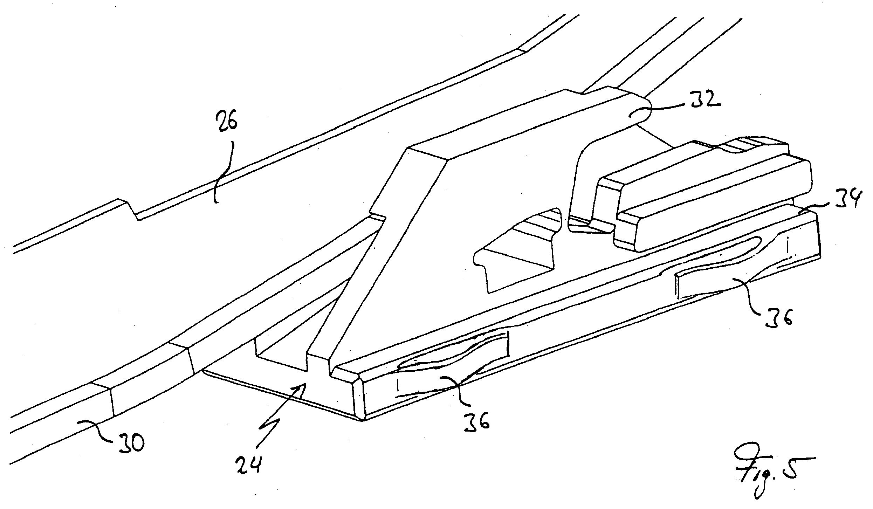

Der Antriebsschlitten 24, der mit einem gegebenenfalls eine obere Gleitfläche für den Führungssteg 30 bildenden Klauenabschnitt 32 den Führungssteg 30 des Trägerelements 26 umgreift, ist ein Kunststoffspritzgießteil, das beidseits mit einem Gleitabschnitt 34 versehen ist, über den der Antriebsschlitten 24 in Führungsbahnen der betreffenden Führungsschiene 20 geführt ist. Der Gleitabschnitt 34 weist an seiner bezogen auf die Längsmittelebene des Antriebsschlittens 24 außen liegenden Seite einstückig ausgebildete Federlaschen 36 auf, die zum Toleranzausgleich in Fahrzeugquerrichtung dienen und in Fig. 5 dargestellt sind.

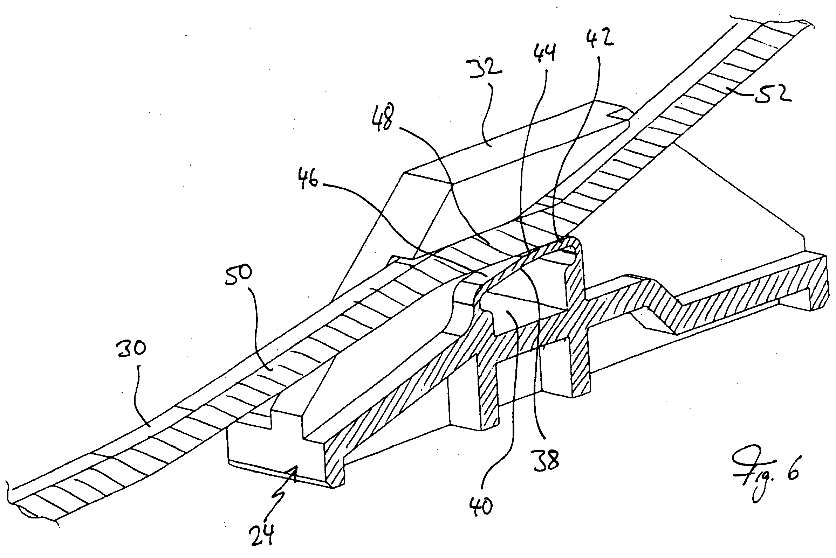

Wie Fig. 6 zu entnehmen ist, weist der Antriebsschlitten 24 einen einstückig mit diesem ausgebildeten Führungsabschnitt 38 auf, der eine untere Gleitfläche für den Führungssteg 30 bildet und von einer Wand gebildet ist, die einen Hohlraum 40 an dessen Oberseite begrenzt. Die den Führungsabschnitt 38 bildende Wand ist elastisch verformbar, so dass die an der Unterseite angeordnete Lauf- bzw. Wirkfläche des Führungsstegs 30 gefedert gelagert ist und somit Toleranzen aufgenommen und Kräfte in Fahrzeughochrichtung abgedämpft werden können.

Der Antriebsschlitten 24 kann als Zweikomponentenspritzgießteil ausgebildet sein, wobei eine erste Komponente, die den Führungsabschnitt 38 und den Klauenabschnitt 32 bildet, hinsichtlich der Gleitpaarung mit dem Kunststoff, der den Führungssteg 30 des Trägerelements 26 umgibt, optimiert ausgelegt ist.

Der Führungsabschnitt 38 ist in drei in Fahrzeuglängsrichtung hintereinander angeordnete Teilbereiche 42, 44 und 46 unterteilt, die jeweils gegeneinander geneigt sind und von denen der Teilbereich 42 einem der Schließstellung des Deckelelements 12 zugeordneten Abschnitt 48, der Teilbereich 44 einem der Lüfterstellung zugeordneten Abschnitt 50 und der Teilbereich 46 einem der abgesenkten Verschiebestellung zugeordneten Teilbereich 52 des Führungsstegs 30 des Trägerelements 26 zugeordnet ist. Durch die zueinander verkippten Teilbereiche 42, 44 und 46 kann in jeder Schwenkphase des Deckelelements 12 ein optimiertes Anlageverhalten zwischen dem Führungsabschnitt 38, der an dem Antriebsschlitten 24 ausgebildet ist, und der Unterseite bzw. Wirkfläche des Führungsstegs 30 des Trägerelements 26 erreicht werden.

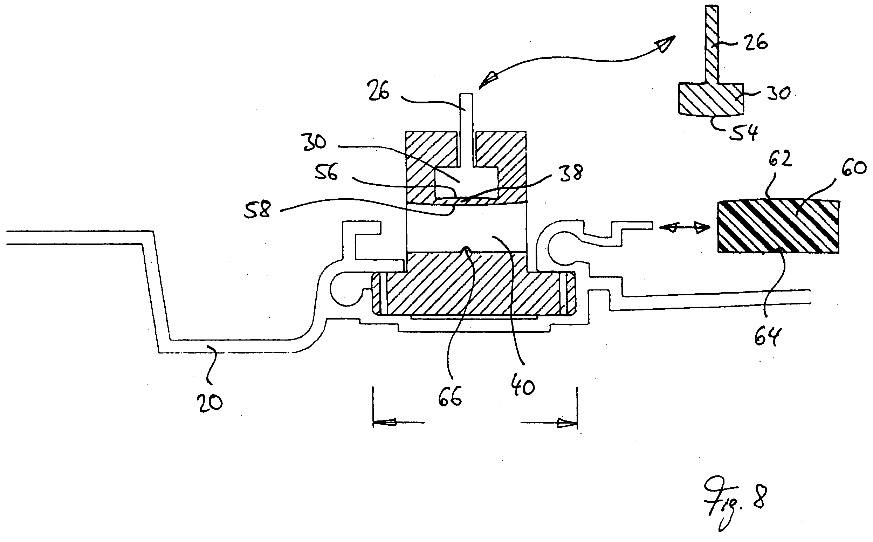

In Fig. 8 sind verschiedene Ausführungsformen zur Optimierung der Vorspannung dargestellt, die von dem Führungsabschnitt 38 des Antriebsschlittens 24 auf das Trägerelement 26 ausgeübt wird. Einerseits ist es möglich, die an der Unterseite des Trägerelements 26 angeordnete Wirkfläche 54 in Querrichtung des Trägerelements 26 mit einem gewölbten Querschnitt auszulegen. Andererseits ist es möglich, wie in Fig. 8 dargestellt, den Führungsabschnitt 38 begrenzende Flächen 56 und 58 in Fahrzeugquerrichtung gekrümmt bzw. gewölbt auszubilden. Des Weiteren ist es möglich, in den Hohlraum 40 ein Dämpfungselement 60 einzusetzen, dessen Oberseite 62 in Querrichtung der Führungsschiene 20 einen gekrümmten Querschnitt hat, der mithin zusätzlich eine überwölbte Fläche 62 hat, die für Vorspannung sorgt. Je nach Anforderung kann durch entsprechende Auslegung der vorbeschriebenen Krümmungen in Kombination oder auch jeweils allein die technisch sinnvollste und kostengünstigste Abstimmung hinsichtlich der Vorspannung in Fahrzeughochrichtung gefunden werden.

Zur Fixierung des Dämpfungselements 60 in dem Hohlraum 40 ist an der Unterseite des Dämpfungselements 60 eine in Fahrzeuglängsrichtung verlaufende Nut 64 angeordnet, in die in Einbaulage ein stegartiger Vorsprung 66 des Antriebsschlittens 24 eingreift.

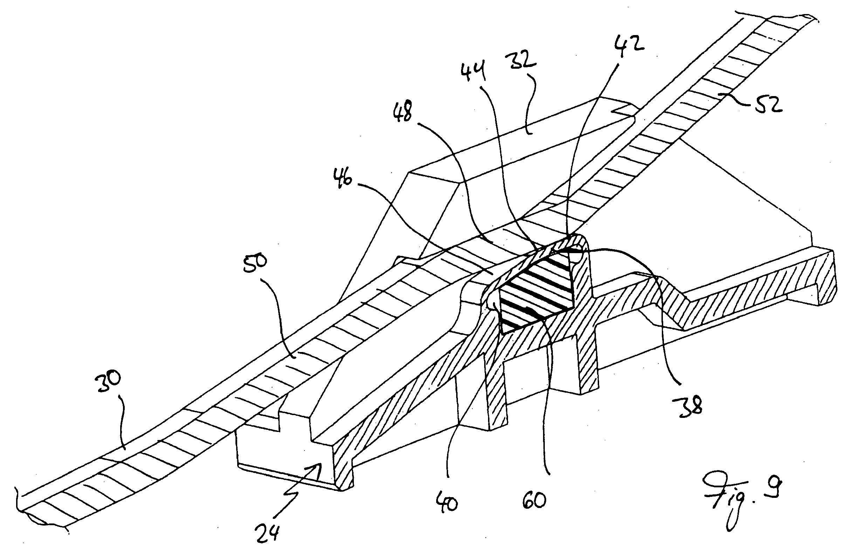

Anhand Fig. 9 ist das Dämpfungselement 60, das beispielsweise aus EPDM, TPE, NBR oder dergleichen besteht, in seiner in dem Hohlraum 40 angeordneten Einbaulage dargestellt. Wie Fig. 9 zu entnehmen ist, liegt die den Führungsabschnitt 38 bildende Wand direkt auf dem Dämpfungselement 60 auf, so dass von dem Trägerelement 26 in den Antriebsschlitten 24 eingetragene Antriebskräfte unmittelbar gedämpft werden können.

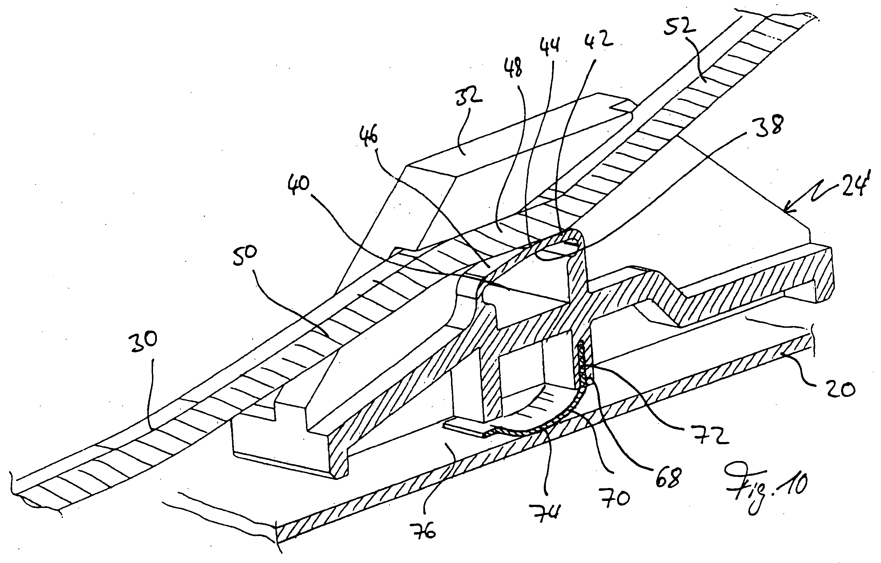

Die in Fig. 10 dargestellte Ausführungsform eines Antriebsschlittens 24' entspricht im Wesentlichen derjenigen nach Fig. 6, unterscheidet sich von dieser aber dadurch, dass der Antriebsschlitten 24' an seiner Unterseite einen Schlitz 68 aufweist, in den eine Blattfeder 70 über einen Fußabschnitt 72 eingesetzt ist, die einen Gleitabschnitt 74 aufweist, welcher an einer Gleitfläche 76 der Führungsschiene 20 abstützt. Die Blattfeder 70 ist unterhalb des Führungsabschnitts 38 des Antriebsschlittens 24 angeordnet, auf dem der Führungssteg 30 des Trägerelements 26 aufliegt.

Die Gleitfläche 76 liegt zwischen den an der Führungsschiene 20 ausgebildeten Führungsbahnen für die beidseitigen Gleitabschnitte 34 des Antriebsschlittens 24'. Auf den Antriebsschlitten 24' in Fahrzeughochrichtung wirkende Kräfte können damit unmittelbar in die Führungsschiene 20 eingeleitet werden.

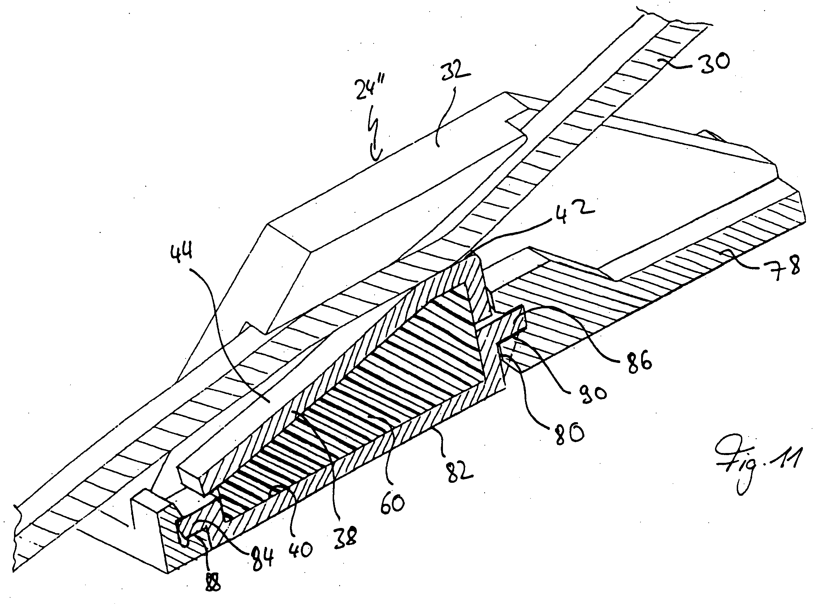

In Fig. 11 ist eine weitere Ausführungsform eines Antriebsschlittens 24'' dargestellt, der sich von den vorstehend beschriebenen Antriebsschlitten dadurch unterscheidet, dass er aus einem als Kunststoffspritzgießteil ausgebildeten Antriebsschlittenkörper 78 gebildet ist, der eine Ausnehmung 80 aufweist, in die ein als ebenfalls als Kunststoffbauteil ausgebildeter Einsatz 82 über Rastnasen 84 und 86 verrastet ist, die in korrespondierende Ausnehmungen 88 und 90 des Antriebsschlittenkörpers 78 eingreifen. Der Einsatz 82 bildet mit seiner oberen Begrenzungswand einen Führungsabschnitt 38 für den Führungssteg 30 des Trägerelements 26 und hat einen ebenfalls von einem Dämpfungselement 60 ausgefüllten Hohlraum 40. Die Funktion des Führungsabschnitts 38, der hier zwei zueinander verkippte Teilbereiche bzw. Führungsflächen 42, 44 hat, entspricht derjenigen des Führungsabschnitts der vorstehend beschriebenen Ausführungsbeispiele.

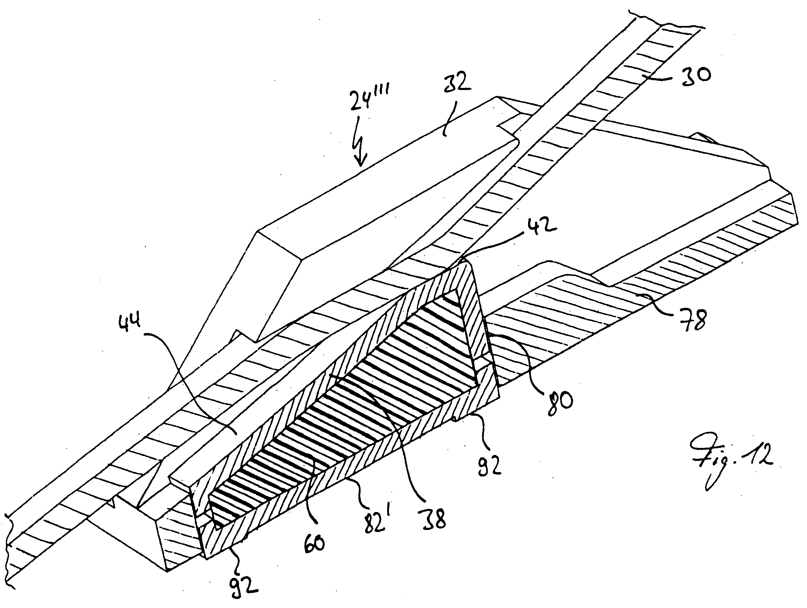

In Fig. 12 ist eine weitere Ausführungsform eines Antriebsschlittens dargestellt, die im Wesentlichen derjenigen nach Fig. 11 entspricht, sich von dieser aber dadurch unterscheidet, dass sich der als Kunststoffbauteil ausgebildete Einsatz 82' über Basisflächenbereiche 92 an einer Gleitfläche der Führungsschiene abstützt. Der Einsatz 82' ist rechtwinkelig der Gleitfläche der Führungsschiene in einer Ausnehmung 80 des Antriebsschlittenkörpers 78 beweglich geführt. Eine Fixierung des Einsatzes 82' in dem Antriebsschlitten 24''' erfolgt nicht.

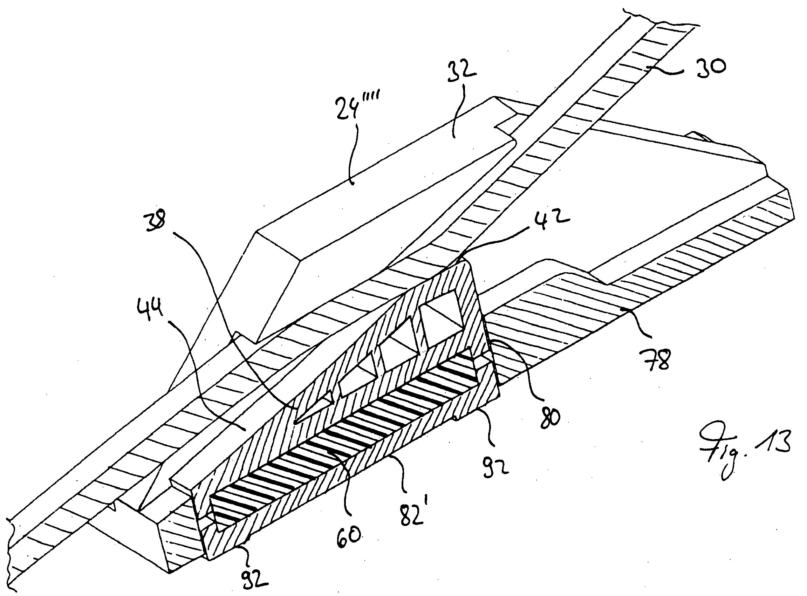

In Fig. 13 ist eine weitere Ausführungsform eines Antriebsschlittens 24'''' dargestellt, dessen Funktion und Wirkungsweise im Wesentlichen derjenigen der vorstehend beschriebenen Ausführungsbeispiele entspricht, sich von dem Ausführungsbeispiel nach Fig. 12 aber dadurch unterscheidet, dass eine einen Führungsabschnitt 38'' bildende Wand bereichsweise doppelwandig ausgebildet ist und die Teilwände des doppelwandigen Führungsabschnitts 38'' durch Stege 94 miteinander verbunden sind.

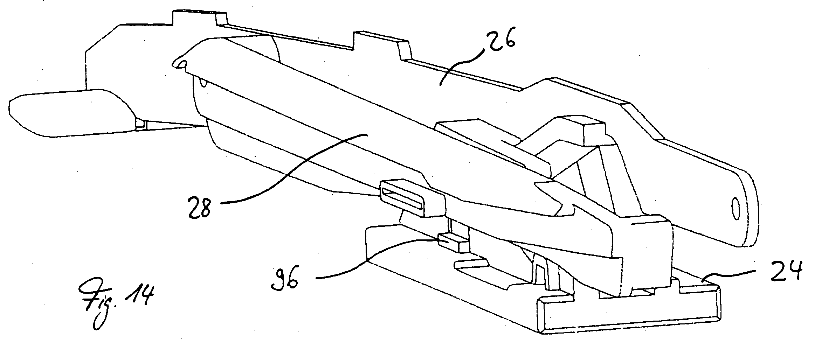

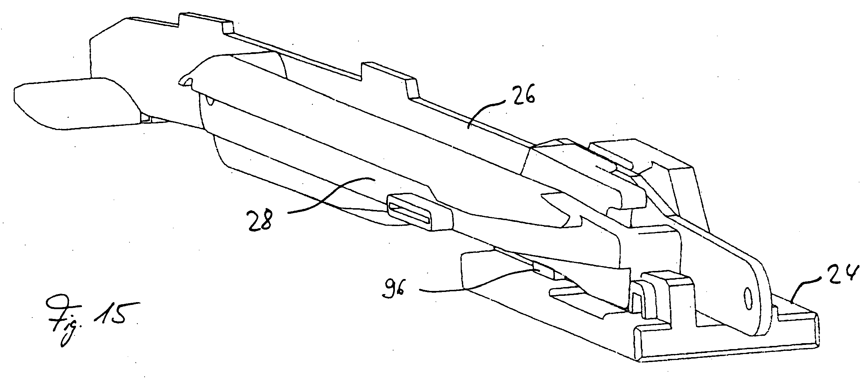

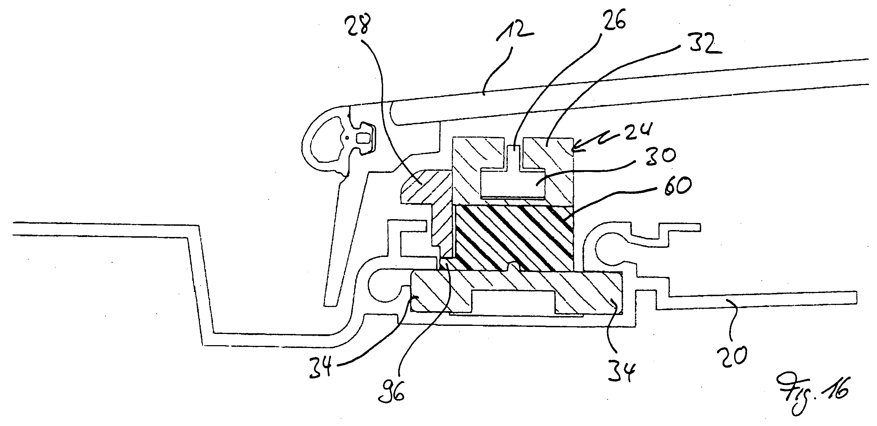

In den Figuren 14 bis 16 ist eine Ausführungsvariante einer Verstelleinrichtung 22' dargestellt, die im Wesentlichen derjenigen nach Fig. 9 entspricht, sich aber dadurch unterscheidet, dass das als Puffer dienende Dämpfungselement 60 einen außerhalb des Antriebsschlittenkörpers angeordneten Vorsprung 96 aufweist, auf dem sich der Verriegelungshebel 28 in der abgesenkten Verschiebestellung des Deckelelements 12 ablegt. Das Ablegen des Verriegelungshebels 28 kann damit ohne Störgeräusche erfolgen.

**Bezugszeichenliste**

| | | | |
|---|---|---|---|
| 10 | Schiebehebedach | 72 | Fußabschnitt |
| 12 | Deckelelement | 74 | Gleitabschnitt |
| 14 | Glaskörper | 76 | Gleitfläche |
| 16 | Rahmen | 78 | Antriebsschlittenkörper |
| 18 | Befestigungslaschen | 80 | Ausnehmung |
| 20 | Führungsschiene | 82 | Einsatz |
| 22 | Verstelleinrichtung | 84 | Rastnase |
| 24 | Antriebsschlitten | 86 | Rastnase |
| 26 | Trägerelement | 88 | Ausnehmung |
| 28 | Verriegelungshebel | 90 | Ausnehmung |
| 30 | Führungssteg | 92 | Basisflächenbereich |
| 32 | Klauenabschnitt | 94 | Stege |
| 34 | Gleitabschnitt | 96 | Vorsprung |
| 36 | Federlaschen | | |
| 38 | Führungsabschnitt | | |
| 40 | Hohlraum | | |
| 42 | Teilbereich | | |
| 44 | Teilbereich | | |
| 46 | Teilbereich | | |
| 48 | Abschnitt | | |
| 50 | Abschnitt | | |
| 52 | Abschnitt | | |
| 54 | Wirkflächen | | |
| 56 | Fläche | | |
| 58 | Fläche | | |
| 60 | Dämpfungselement | | |
| 62 | Oberseite | | |
| 64 | Nut | | |
| 66 | Vorsprung | | |
| 68 | Schlitz | | |
| 70 | Blattfeder | | |

## Patentansprüche

1. Fahrzeugdach mit mindestens einem eine Dachöffnung wahlweise verschließenden oder zumindest teilweise freigebenden Deckelelement (12), das bezogen auf die Fahrzeuglängsmittelebene beidseits jeweils ein Trägerelement (26) aufweist, das mit einer Führungskulisse (30) versehen ist und mit einer Verstelleinrichtung zusammenwirkt, die in einer in Fahrzeuglängsrichtung angeordneten Führungsschiene (20) geführt ist und ein Schlittenelement (24) umfasst, das mit der Führungskulisse (30) des jeweiligen Trägerelements (26) zumindest zum Verschwenken des Deckelelements (12) zusammenwirkt und einen Führungsabschnitt (38) umfasst, auf dem das Trägerelement (26) aufliegt, **dadurch gekennzeichnet, dass** der Führungsabschnitt (38) von einer Wand eines Kunststoffbauteils gebildet ist, die elastisch verformbar in einen von dem Kunststoffbauteil gebildeten Hohlraum ausweichen kann.

2. Fahrzeugdach nach Anspruch 1, **dadurch gekennzeichnet, dass** das Schlittenelement (24) ein Kunststoffspritzgießteil ist.

3. Fahrzeugdach nach Anspruch 1 oder 2, **dadurch gekennzeichnet, dass** das Kunststoffbauteil, das die den Führungsabschnitt (38) bildende Wand aufweist, einstückig mit dem Schlittenelement (24) ausgebildet ist.

4. Fahrzeugdach nach Anspruch 2 oder 3, **dadurch gekennzeichnet, dass** das Schlittenelement (24) als Zweikomponentenspritzgießteil ausgebildet ist und ein Schlittenelementkörper von einer ersten Kunststoffkomponente und das Kunststoffbauteil von einer zweiten Kunststoffkomponente gebildet ist.

5. Fahrzeugdach nach Anspruch 1 oder 2, **dadurch gekennzeichnet, dass** das Kunststoffbauteil ein Einsatz (82) eines Körpers (78) des Schlittenelements ist.

6. Fahrzeugdach nach Anspruch 5, **dadurch gekennzeichnet, dass** das Kunststoffbauteil (82) an dem Schlittenelementkörper (78) verrastet ist.

7. Fahrzeugdach nach Anspruch 5, **dadurch gekennzeichnet, dass** das Kunststoffbauteil (82) sich mit einer Basisfläche (92) an der Führungsschiene (20) abstützt und rechtwinkelig zur Basisfläche (92) in einer korrespondierenden Ausnehmung (80) des Schlittenelementkörpers (78) geführt ist.

8. Fahrzeugdach nach einem der Ansprüche 1 bis 7, **dadurch gekennzeichnet, dass** in dem Hohlraum (40) ein elastisch verformbares Dämpfungselement (60) angeordnet ist, an dem sich die den Führungsabschnitt (38) bildende Wand abstützt.

9. Fahrzeugdach nach Anspruch 8, **dadurch gekennzeichnet, dass** das Dämpfungselement (60) an seiner an der den Führungsabschnitt bildenden Wand anliegenden Seite quer zur Erstreckung der Führungsschiene (20) gekrümmt ausgebildet ist.

10. Fahrzeugdach nach Anspruch 8 oder 9, **dadurch gekennzeichnet, dass** das Dämpfungselement (60) eine Aussparung (64) aufweist, in die ein Vorsprung (66) des Schlittenelements (24) eingreift und die das Dämpfungselement (60) in Position hält.

11. Fahrzeugdach nach einem der Ansprüche 8 bis 10, **dadurch gekennzeichnet, dass** das Schlittenelement (24) seitlich eine Öffnung zum Einsetzen des Dämpfungselements (60) hat.

12. Fahrzeugdach nach einem der Ansprüche 8 bis 11, **dadurch gekennzeichnet, dass** das Dämpfungselement (60) einen Vorsprung bildet, der als Ablage für einen Verriegelungshebel (28) der Verstelleinrichtung (22) dient.

13. Fahrzeugdach nach einem der Ansprüche 1 bis 12, **dadurch gekennzeichnet, dass** die den Führungsabschnitt (38) bildende Wand zumindest einseitig quer zur Längserstreckung der Führungsschiene (20) gekrümmt ausgebildet ist.

14. Fahrzeugdach nach einem der Ansprüche 1 bis 13, **dadurch gekennzeichnet, dass** die Führungskulisse (30) des Trägerelements (26) eine an dem Führungsabschnitt (38) anliegende Wirkfläche (54) hat, die in Querrichtung des Trägerelements (26) gekrümmt ist.

15. Fahrzeugdach nach einem der Ansprüche 1 bis 14, **dadurch gekennzeichnet, dass** der Führungsabschnitt (38) von mindestens zwei jeweils einen Teilbereich (42,44,46) bildenden Führungsflächen gebildet ist, die jeweils einer Schwenkphase des Deckelelements (12) zugeordnet sind und in Längsrichtung der Führungsschiene (20) hintereinander angeordnet sind.

16. Fahrzeugdach nach einem der Ansprüche 1 bis 15, **dadurch gekennzeichnet, dass** die den Führungsabschnitt (38) bildende Wand doppelwandig ausgebildet ist.

17. Fahrzeugdach nach einem der Ansprüche 1 bis 16, **dadurch gekennzeichnet, dass** an dem Schlittenelement einstückig angeformte Federlaschen (36) angeordnet sind, die in zugeordneten Führungsbahnen der jeweiligen Führungsschiene (20) an einer Führungsbahnwand anliegen.

18. Fahrzeugdach, mit mindestens einem eine Dachöffnung wahlweise verschließenden oder zumindest teilweise freigebenden Deckelelement (12), das bezogen auf die Fahrzeuglängsmittelebene beidseits jeweils ein Trägerelement (26) aufweist, das mit einer Führungskulisse (30) versehen ist, und mit einer Verstelleinrichtung (22) zusammenwirkt, die in einer in Fahrzeuglängsrichtung angeordneten Führungsschiene (20) geführt ist und ein Schlittenelement (24) umfasst, das mit der Führungskulisse (30) zumindest zum Verschwenken des Deckelelements (12) zusammenwirkt und einen Führungsabschnitt (38) umfasst, auf dem das Trägerelement (26) aufliegt, **dadurch gekennzeichnet, dass** sich das Schlittenelement über eine bezogen auf die Längsmittelebene des Schlittenelements (24) mittig angeordnete, unterseitige Feder (70), die unterhalb des Führungsabschnitts (38) liegt, an der betreffenden Führungsschiene (20) abstützt.

19. Fahrzeugdach nach Anspruch 18, **dadurch gekennzeichnet, dass** die Feder (70) eine Blattfeder ist, die über einen Gleitabschnitt (74) an der Führungsschiene (20) anliegt.

20. Fahrzeugdach nach Anspruch 18 oder 19, **dadurch gekennzeichnet, dass** die Feder (70) ein Einsatz des Schlittenelements (24) ist.

## Claims

1. A vehicle roof having at least one lid member (12) which selectively closes or clears, at the very least partially, a roof opening, and which, in relation to the longitudinal centre plane of the vehicle on each of its two sides, includes a support member (26) being provided with a guide curve (30) and interacting with an adjusting means, which is guided in a guide rail (20) being arranged in the longitudinal direction of the vehicle and comprises a slide member (24), which interacts with the guide curve (30) of the respective support member (26), at the very least for pivoting the lid member (12), and comprises a guide section (38), the support member (26) resting thereon, **characterised in that** the guide section (38) is formed by a wall of a plastic piece, said wall being able to deviate, in a fashion so as to be elastically deformable, into a cavity that is formed by the plastic piece.

2. The vehicle roof according to claim 1, **characterised in that** the slide member (24) is an injection moulded plastic part.

3. The vehicle roof according to claim 1 or 2, **characterised in that** the plastic piece, which includes the wall forming the guide section (38), is realised integrally with the slide member (24).

4. The vehicle roof according to claim 2 or 3, **characterised in that** the slide member (24) is realised as a two-component injection moulded plastic part and **in that** a slide member body is formed by a first plastic component and the plastic piece is formed by a second plastic component.

5. The vehicle roof according to claim 1 or 2, **characterised in that** the plastic piece is an insert (82) of a body (78) of the slide member.

6. The vehicle roof according to claim 5, **characterised in that** the plastic piece (82) is latched at the slide member body (78).

7. The vehicle roof according to claim 5, **characterised in that** the plastic piece (82) is supported at the guide rail (20) with a base surface (92) and guided in a corresponding recess (80) of the slide member body (78), at a right angle to the base surface (92).

8. The vehicle roof according to any one of the claims 1 to 7, **characterised in that** a dampening member (60) that is elastically deformable is arranged in the cavity (40), the wall forming the guide section (38) being supported at said member.

9. The vehicle roof according to claim 8, **characterised in that** dampening member (60), at its side resting against the wall that forms the guide section, is realised so as to be curved, transverse to the extension of the guide rail (20).

10. The vehicle roof according to claim 8 or 9, **characterised in that** the dampening member (60) includes a recess (64), a protrusion (66) of the slide member (24) engaging said recess and said recess keeping up the position of the dampening member (60).

11. The vehicle roof according to any one of the claims 8 to 10, **characterised in that** the slide member (24), at the side, has an opening for inserting the dampening member (60).

12. The vehicle roof according to any one of the claims 8 to 11, **characterised in that** the dampening member (60) forms a protrusion, which serves as a repository for a locking lever (28) of the adjusting means (22).

13. The vehicle roof according to any one of the claims 1 to 12, **characterised in that** the wall forming the guide section (38) is realised so as to be curved, at the very least unilaterally transverse to the longitudinal extension of the guide rail (20).

14. The vehicle roof according to any one of the claims 1 to 13, **characterised in that** the guide curve (30) of the support member (26) has an effective surface (54) which rests against the guide section (38), and which is curved in the transverse direction of the support member (26).

15. The vehicle roof according to any one of the claims 1 to 14, **characterised in that** the guide section (38) is formed by at least two guide surfaces, each of which forms a subregion (42, 44, 46), and each of which is assigned to a pivoting phase of the lid member (12), said surfaces being arranged one behind the other in the longitudinal direction of the guide rail (20).

16. The vehicle roof according to any one of the claims 1 to 15, **characterised in that** the wall forming the guide section (38) is realised as a double wall.

17. The vehicle roof according to any one of the claims 1 to 16, **characterised in that** spring tabs (36) being integrally moulded onto the slide member are arranged at said slide member and rest against a guide track wall in assigned guide tracks of the respective guide rail (20).

18. A vehicle roof, having at least one lid member (12) which selectively closes or clears, at the very least partially, a roof opening, and which, in relation to the longitudinal centre plane of the vehicle on each of its two sides, includes a support member (26) being provided with a guide curve (30), and interacting with an adjusting means (22), which is guided in a guide rail (20) being arranged in the longitudinal direction of the vehicle and comprises a slide member (24), which interacts with the guide curve (30), at the very least for pivoting the lid member (12), and comprises a guide section (38), the support member (26) resting thereon, **characterised in that** the slide member is supported at the relevant guide rail (20) via a bottom-side spring (70) which is arranged centrally in relation to the longitudinal centre plane of the slide member (24), and which is below the guide section (38).

19. The vehicle roof according to claim 18, **characterised in that** the spring (70) is a leaf spring, which rests against the guide rail (20) via a sliding section (74).

20. The vehicle roof according to claim 18 or 19, **characterised in that** the spring (70) is an insert of the slide member (24).

## Revendications

1. Toit de véhicule ayant au moins un élément (12) de capot qui au choix ferme ou dégage, du moins en partie, une ouverture de toit, et qui, relativement au plan central longitudinal du véhicule, de part et d'autre, présente un élément (26) de support étant muni d'une coulisse (30) de guidage et coopérant avec un appareillage d'ajustage, qui est guidé dans un rail (20) de guidage étant disposé dans la direction longitudinale du véhicule et comprend un élément (24) de coulisseau, qui coopère avec la coulisse (30) de guidage de l'élément (26) de support respectif, du moins pour pivoter l'élément (12) de capot, et comprend une partie (38) de guidage, sur laquelle l'élément (26) de support repose, **caractérisé en ce que** la partie (38) de guidage est formée par une paroi d'un élément de construction en matière plastique, ladite paroi pouvant s'écarter de façon à être déformable élastiquement dans un vide qui est formé par l'élément de construction en matière plastique.

2. Toit de véhicule selon la revendication 1, **caractérisé en ce que** l'élément (24) de coulisseau est une pièce plastique moulée par injection.

3. Toit de véhicule selon la revendication 1 ou 2, **caractérisé en ce que** l'élément de construction en matière plastique, qui présente la paroi formant la partie (38) de guidage, est réalisé d'un seul tenant avec l'élément (24) de coulisseau.

4. Toit de véhicule selon la revendication 2 ou 3, **caractérisé en ce que** l'élément (24) de coulisseau est réalisé comme une pièce plastique moulée par injection à deux composants et **en ce qu'**un corps d'élément de coulisseau est formé par un premier composant plastique et l'élément de construction en matière plastique est formé par un deuxième composant plastique.

5. Toit de véhicule selon la revendication 1 ou 2, **caractérisé en ce que** l'élément de construction en matière plastique est un insert (82) d'un corps (78) de l'élément de coulisseau.

6. Toit de véhicule selon la revendication 5, **caractérisé en ce que** l'élément de construction en matière plastique (82) est enclenché au corps (78) d'élément de coulisseau.

7. Toit de véhicule selon la revendication 5, **caractérisé en ce que** l'élément de construction en matière plastique (82) est appuyé au rail (20) de guidage avec une surface (92) de base et guidé dans une échancrure (80) correspondante du corps (78) d'élément de coulisseau, à angle droit par rapport à la surface (92) de base.

8. Toit de véhicule selon l'une quelconque des revendications 1 à 7, **caractérisé en ce qu'**un élément (60) d'affaiblissement est disposé dans le vide (40), étant déformable élastiquement, la paroi formant la partie (38) de guidage étant appuyée audit élément.

9. Toit de véhicule selon la revendication 8, **caractérisé en ce que** l'élément (60) d'affaiblissement, sur son côté placé vers la paroi qui forme la partie de guidage, est réalisé de façon à être incurvé, en travers de l'extension du rail (20) de guidage.

10. Toit de véhicule selon la revendication 8 ou 9, **caractérisé en ce que** l'élément (60) d'affaiblissement présente un évidement (64), un épaulement (66) de l'élément (24) de coulisseau pénétrant dans ledit évidement et ledit évidement maintenant la position de l'élément (60) d'affaiblissement.

11. Toit de véhicule selon l'une quelconque des revendications 8 à 10, **caractérisé en ce que** l'élément (24) de coulisseau d'un côté a une ouverture pour insérer l'élément (60) d'affaiblissement.

12. Toit de véhicule selon l'une quelconque des revendications 8 à 11, **caractérisé en ce que** l'élément (60) d'affaiblissement forme un épaulement, qui sert comme dépôt pour un levier (28) de verrouillage de l'appareillage (22) d'ajustage.

13. Toit de véhicule selon l'une quelconque des revendications 1 à 12, **caractérisé en ce que** la paroi formant la partie (38) de guidage est réalisé de façon à être incurvée, du moins à un côté en travers de l'extension longitudinale du rail (20) de guidage.

14. Toit de véhicule selon l'une quelconque des revendications 1 à 13, **caractérisé en ce que** la coulisse (30) de guidage de l'élément (26) de support a une surface effective (54) qui est placée vers la partie (38) de guidage, et qui est incurvée dans la direction transversale de l'élément (26) de support.

15. Toit de véhicule selon l'une quelconque des revendications 1 à 14, **caractérisé en ce que** la partie (38) de guidage est formée par au moins deux surfaces de guidage, lesdites surfaces chaque fois formant une sous-partie (42, 44, 46), et étant associées avec une phase de pivotement de l'élément (12) de capot chaque fois et étant disposées l'une derrière l'autre dans la direction longitudinale du rail (20) de guidage.

16. Toit de véhicule selon l'une quelconque des revendications 1 à 15, **caractérisé en ce que** la paroi formant la partie (38) de guidage est réalisé comme paroi double.

17. Toit de véhicule selon l'une quelconque des revendications 1 à 16, **caractérisé en ce que** des brides (36) de ressort sont disposées à l'élément de coulisseau, lesdites brides étant façonnées à l'élément de coulisseau d'un seul tenant, et étant placées vers une paroi de couloir de guidage dans des couloirs de guidage associés du rail (20) de guidage respectif.

18. Toit de véhicule, ayant au moins un élément (12) de capot qui au choix ferme ou dégage, du moins en partie, une ouverture de toit, et qui, relativement au plan central longitudinal du véhicule, de part et d'autre, présente un élément (26) de support étant muni d'une coulisse (30) de guidage, et coopérant avec un appareillage (22) d'ajustage, qui est guidé dans un rail (20) de guidage étant disposé dans la direction longitudinale du véhicule et comprend un élément (24) de coulisseau, qui coopère avec la coulisse (30) de guidage, du moins pour pivoter l'élément (12) de capot, et comprend une partie (38) de guidage, sur laquelle l'élément (26) de support repose, **caractérisé en ce que** l'élément de coulisseau est appuyé au rail (20) de guidage en question au travers un ressort (70) du côté inférieur qui est disposé au centre relativement au plan central longitudinal de l'élément (24) de coulisseau, et qui est au-dessous de la partie (38) de guidage.

19. Toit de véhicule selon la revendication 18, **caractérisé en ce que** le ressort (70) est un ressort à lames, qui est placé vers le rail (20) de guidage au travers une partie (74) de glissement.

20. Toit de véhicule selon la revendication 18 ou 19, **caractérisé en ce que** le ressort (70) est un insert de l'élément (24) de coulisseau.
